(19) Europäisches Patentamt
European Patent Office
Office européen des brevets

(11) **EP 3 011 272 B1**

(12) **EUROPÄISCHE PATENTSCHRIFT**

(45) Veröffentlichungstag und Bekanntmachung des Hinweises auf die Patenterteilung:
**01.05.2019 Patentblatt 2019/18**

(21) Anmeldenummer: **14730501.5**

(22) Anmeldetag: **11.06.2014**

(51) Int Cl.:
**G01C 21/32** (2006.01)  **B60W 30/18** (2012.01)

(86) Internationale Anmeldenummer:
**PCT/EP2014/062059**

(87) Internationale Veröffentlichungsnummer:
**WO 2014/202435 (24.12.2014 Gazette 2014/52)**

(54) **VERFAHREN UND VORRICHTUNG ZUM BEARBEITEN VON KARTENDATEN EINER DIGITALEN KARTE**

METHOD AND DEVICE FOR PROCESSING MAP DATA OF A DIGITAL MAP

PROCEDE ET DISPOSITIF DE TRAITEMENT DE DONNEES CARTOGRAPHIQUES D'UNE CARTE NUMERIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.06.2013 DE 102013211800**

(43) Veröffentlichungstag der Anmeldung:
**27.04.2016 Patentblatt 2016/17**

(73) Patentinhaber: **Robert Bosch GmbH**
**70442 Stuttgart (DE)**

(72) Erfinder:
• **JOHANNABER, Martin**
**71282 Hemmingen (DE)**
• **DENNER, Volkmar**
**72793 Pfullingen (DE)**
• **POECHMUELLER, Werner**
**31139 Hildesheim (DE)**

(56) Entgegenhaltungen:
**EP-A1- 2 529 993        EP-A2- 2 591 968**
**WO-A1-2006/107267     DE-A1-102009 006 524**
**US-A- 5 913 376        US-A1- 2004 068 359**

EP 3 011 272 B1

## Beschreibung

Die Erfindung betrifft ein Verfahren zum Bearbeiten von Kartendaten einer digitalen Karte. Die Erfindung betrifft ferner eine Vorrichtung zum Bearbeiten von Kartendaten einer digitalen Karte. Die Erfindung betrifft des Weiteren ein Computerprogramm.

Stand der Technik

Die Offenlegungsschrift EP 2 591 968 A2 zeigt ein Verfahren zum Betreiben eines Fahrzeugs.

Die Offenlegungsschrift DE 10 2009 006 524 A1 zeigt ein Verfahren zur Information von Fahrern von straßenbasierten Fahrzeugen.

Die Offenlegungsschrift EP 2 529 993 A1 zeigt ein Kraftfahrzeug umfassend ein Fahrerassistenzsystem mit einer Steuerungseinrichtung zur automatischen Längsführung.

Die Offenlegungsschrift WO 2006/107267 A1 zeigt ein Verfahren und ein System zum Steuern eines Betriebs eines Fahrzeugs.

Die Offenlegungsschrift US 2004/0068359 A1 offenbart ein Verfahren zum Regeln einer Geschwindigkeit eines Fahrzeugs.

Die Patentschrift US 5,913,376 offenbart ein Verfahren zum Steuern eines Fahrzeugs.

Die Offenlegungsschrift DE 1 03 45 319 A1 beschreibt eine automatisierte, vorausschauende Beeinflussung von Fahrzeugbetriebsparametern wie zum Beispiel der Fahrzeuggeschwindigkeit über einen Tempomaten. Dazu wird die vorausliegende Straßensteigung aus einer digitalen Karte verwendet.

Eine solche digitale Karte umfassend Informationen über eine Straßensteigung benötigt in der Regel einen erheblichen Speicherbedarf.

Offenbarung der Erfindung

Die der Erfindung zugrunde liegende Aufgabe kann daher darin gesehen werden, ein Verfahren zum Bearbeiten von Kartendaten einer digitalen Karte bereitzustellen, das einen benötigten Speicherbedarf für die digitale Karte reduziert.

Die der Erfindung zugrunde liegende Aufgabe kann auch darin gesehen werden, eine entsprechende Vorrichtung zum Bearbeiten von Kartendaten einer digitalen Karte bereitzustellen.

Die der Erfindung zugrunde liegende Aufgabe kann des Weiteren darin gesehen werden, ein entsprechendes Computerprogramm bereitzustellen.

Diese Aufgaben werden mittels des jeweiligen Gegenstands der unabhängigen Ansprüche gelöst. Vorteilhafte Ausgestaltungen sind Gegenstand von jeweils abhängigen Unteransprüchen.

Nach einem Aspekt der Erfindung wird ein Verfahren zum Bearbeiten von Kartendaten einer digitalen Karte gemäß Anspruch 1 bereitgestellt.

Gemäß einem anderen Aspekt der Erfindung wird eine Vorrichtung zum Bearbeiten von Kartendaten einer digitalen Karte gemäß Anspruch 7 bereitgestellt.

Nach noch einem Aspekt der Erfindung wird ein Computerprogramm gemäß Anspruch 8 bereitgestellt.

Das Verknüpfen oder das Verbinden der topographischen Streckendaten mit den Positionsdaten ausschließlich für eine Teilfahrstrecke bewirkt in vorteilhafter Weise, dass bei Abruf der Streckenposition aufgrund der Verknüpfung oder der Verbindung gleichzeitig die topographischen Streckendaten bereitgestellt werden können. Hier wird deshalb in vorteilhafter Weise Speicherplatz eingespart, da so nur für die Teilfahrstrecke vor der Streckenposition Topographiedaten abgespeichert werden müssen. Da also die so verknüpften Daten Grundlage einer digitalen Karte sind, so benötigt diese erheblich weniger Speicherplatz, als wenn für die vollständige Fahrstrecke sämtliche topographische Streckendaten mit abgespeichert werden. Das heißt also insbesondere, dass lediglich für die Teilfahrstrecke die entsprechenden zugeordneten topographischen Streckendaten mit abgespeichert werden. Topographische Streckendaten, welche in Fahrtrichtung vor dieser Teilfahrstrecke liegen, werden nicht mit abgespeichert.

Topographische Streckendaten im Sinne der vorliegenden Erfindung beschreiben insbesondere eine Topographie der Fahrstrecke. Insbesondere umfassen topographische Streckendaten Informationen über eine Steigung und/oder ein Gefälle der Fahrstrecke. Das heißt also insbesondere, dass topographische Streckendaten Steigungswerte und Gefällwerte, also insbesondere negative Steigungswerte, umfassen können.

Positionsdaten im Sinne der vorliegenden Erfindung beschreiben insbesondere eine Position der vorbestimmten Streckenposition.

Geschwindigkeitsdaten im Sinne der vorliegenden Erfindung beschreiben insbesondere, welche Fahrzeugsollgeschwindigkeit ein Fahrzeug an der vorbestimmten Streckenposition aufweisen soll. Das heißt also beispielsweise, dass an der vorbestimmten Streckenposition eine Geschwindigkeitsbegrenzung beginnen kann. Beispielsweise kann hier ein Geschwindigkeitsbegrenzungsschild an der Fahrstrecke angeordnet sein. Insbesondere kann es sich bei der vorbestimmten Streckenposition beispielsweise um eine Ortseinfahrt oder eine Autobahnzufahrt handeln. Beispielsweise kann es sich bei der vorbestimmten Streckenposition um eine Kurve handeln.

Eine Teilfahrstrecke im Sinne der vorliegenden Erfindung bezeichnet insbesondere lediglich einen Teil der Fahrstrecke und die gesamte Fahrstrecke, die in Fahrtrichtung vor der vorbestimmten Streckenposition liegt.

In der Regel ist es sinnvoll, dass das Fahrzeug so ausrollt, dass seine Fahrzeugistgeschwindigkeit an der vorbestimmten Streckenposition der Fahrzeugsollgeschwindigkeit entspricht.

Ein Ausrollen im Sinne der vorliegenden Erfindung bezeichnet insbesondere einen Betrieb des Fahrzeugs, in welchem keine Antriebsleistung gefordert wird. Das heißt also insbesondere, dass beispielsweise ein Fahrer keine Antriebsleistung von einer Fahrzeugantriebsmaschine anfordert. Insbesondere nimmt er hierfür seinen Fuß vom Gaspedal oder betätigt nicht das Gaspedal. Da das Fahrzeug an der vorbestimmten Streckenposition eine bestimmte Fahrzeugsollgeschwindigkeit aufweisen soll, wobei das Fahrzeug vor der vorbestimmten Streckenposition entsprechend mit dem Ausrollen beginnen soll, kann die vorbestimmte Streckenposition auch als ein Ausrollereignis bezeichnet werden. Ein Ausrollereignis bezeichnet also eine Position an der Fahrstrecke, an der das Fahrzeug eine vorbestimmte Fahrzeugsollgeschwindigkeit aufweisen soll.

Ein Ausrollereignis triggert also insbesondere ein Ausrollen des Fahrzeugs, so dass das Fahrzeug an der Position des Ausrollereignisses eine vorbestimmte Fahrzeugsollgeschwindigkeit aufweisen soll.

Gemäß einer Ausführungsform kann vorgesehen sein, dass eine Länge der Teilfahrstrecke in Abhängigkeit von einer Topographie der Fahrstrecke vor der vorbestimmten Streckenposition bestimmt wird.

Dadurch kann in vorteilhafter Weise eine bessere Ausrollstrategie für das Ausrollen zur Verfügung gestellt werden, da nun konkret die real vorliegende Topographie zur Berechnung einer Ausrollstrategie verwendet werden kann. Beispielsweise kann vorgesehen sein, dass bei einem großen Gefälle der Fahrstrecke vor der vorbestimmten Streckenposition die Teilfahrstrecke entsprechend lang gewählt wird. Das heißt also insbesondere, dass bei einer negativen Steigung, also einem Gefälle, eine Länge der Teilfahrstrecke proportional zu der negativen Steigung sein kann. Das heißt also insbesondere, dass je länger das Gefälle ist desto länger kann die Länge der Teilfahrstrecke sein. So benötigt ein heutiges Mittelklassefahrzeug in der Ebene (0° Steigung) im Motorschubbetrieb (eingekuppelt) ungefähr eine Ausrollstrecke von 260m wenn es von einer Anfangsgeschwindigkeit von 70km/h (typische Landstraßengeschwindigkeit) auf 50km/h ausrollt (Ortseinfahrt). Liegt ein Gefälle von nur -2° vor, so erhöht sich die Ausrollstrecke auf ungefähr 600m.

Bei einem großen Anstieg der Fahrstrecke vor der vorbestimmten Streckenposition kann beispielsweise vorgesehen sein, dass im Vergleich zu dem großen Gefälle eine kleinere Länge für die Teilfahrstrecke vorgesehen ist. Dies ist deshalb sinnvoll, da bei einem großen Anstieg vor der vorbestimmten Streckenposition das Fahrzeug lediglich eine kleinere Teilfahrstrecke benötigt, um so auszurollen, dass die Fahrzeugistgeschwindigkeit der Fahrzeugsollgeschwindigkeit der vorbestimmten Streckenposition entspricht. Liegt in dem oben genannten Szenario (Mittelklassefahrzeug soll mit schleppendem Motor von 70km/h auf 50km/h ausrollen) eine Steigung von +2° vor, so verkürzt sich der Ausrollvorgang auf ungefähr 150m. Bei einem großen Gefälle hingegen kann das Fahrzeug über eine entsprechend längere Strecke ausrollen, sodass hier auch entsprechend mehr Informationen über die Topographie vorliegen müssen, um eine gute Ausrollstrategie berechnen zu können.

Nach einer weiteren Ausführungsform kann vorgesehen sein, dass eine Länge der Teilfahrstrecke in Abhängigkeit eines eine physikalische Eigenschaft eines Fahrzeugs beschreibenden Fahrzeugparameters, insbesondere von mehreren Fahrzeugparametern, bestimmt wird.

Fahrzeugparameter im Sinne der vorliegenden Erfindung beschreiben insbesondere eine physikalische Eigenschaft des Fahrzeugs. Solche physikalischen Eigenschaften können beispielsweise eine Masse des Fahrzeugs, ein Reibungskoeffizient der Reifen, ein Beladungszustand, ein Kraftstofffüllstand, ein Luftwiderstandsbeiwert und/oder ein Rollwiderstand sein. Da unterschiedliche Fahrzeuge unterschiedlich gut ausrollen können, kann so in vorteilhafter Weise eine optimale Ausrollstrategie spezifisch für ein bestimmtes Fahrzeug ermittelt werden.

Nach einer weiteren Ausführungsform kann vorgesehen sein, dass eine Länge der Teilfahrstrecke in Abhängigkeit eines einen Betriebszustand eines Fahrzeugs beschreibenden Fahrzeugbetriebsparameters, insbesondere von mehreren Fahrzeugbetriebsparametern, bestimmt wird.

Fahrzeugbetriebsparameter im Sinne der vorliegenden Erfindung beschreiben insbesondere einen Betriebszustand des Fahrzeugs. Ein solcher Betriebszustand kann beispielsweise ein Ausrollen mit einem Motorschleppmoment sein. Ein Betriebszustand des Fahrzeugs kann beispielsweise ein Ausrollen mit von einem Antriebsstrang abgekoppelten Antriebsmotor sein.

Bei einem Ausrollen mit einem Motorschleppmoment ist der Antriebsmotor noch an den Antriebsstrang gekoppelt. Der Fahrer fordert aber keine Antriebsleistung vom Antriebsmotor an.

So rollt ein Fahrzeug mit einem Motorschleppmoment anders aus als ein Fahrzeug, bei welchem der Antriebsmotor vom Antriebsstrang abgekoppelt ist. Dies wird in vorteilhafter Weise bei der Berechnung der Länge der Teilfahrstrecke nun berücksichtigt, sodass nicht unnötigerweise zu viele topographische Streckendaten oder gar zu wenige topographische Streckendaten mit den Positionsdaten verknüpft werden.

Gemäß einer weiteren Ausführungsform kann vorgesehen sein, dass basierend auf den entsprechenden Parametern ein Ausrollen des Fahrzeugs zum Erreichen der vorbestimmten Streckenposition mit der vorgegebenen Sollgeschwindigkeit simuliert wird, sodass basierend auf der Simulation die Länge der Teilfahrstrecke bestimmt wird.

Diese entsprechenden Parameter können beispielsweise die Fahrzeugparameter und/oder die Fahrzeugbetriebsparameter sein.

Mittels der Simulation kann somit in vorteilhafter Weise die Länge der Teilfahrstrecke besonders genau bestimmt werden, sodass wirklich nur die Topographiedaten mit den Positionsdaten verknüpft werden, die für ein Ausrollen notwendig und relevant sind.

Gemäß einer weiteren Ausführungsform kann vorgesehen sein, dass vor der Verknüpfung die der Teilfahrstrecke zugeordneten Steigungsdaten gemittelt werden, um gemittelte Steigungsdaten zu bilden, die der Teilfahrstrecke zugeordnet werden, wobei diese zugeordneten gemittelten Steigungsdaten mit den Positionsdaten verknüpft werden.

Eine einfache Mittlung reduziert in vorteilhafter Weise weiter einen Speicherbedarf. Dennoch sind die entsprechenden verknüpften Daten dazu geeignet, um einen optimalen Ausrollvorgang oder eine optimale Ausrollstrategie zu berechnen. Eventuelle Abweichungen mit der Realität, also beispielsweise eine Differenz zwischen berechneter Fahrzeugsollgeschwindigkeit während des Ausrollens und realer Fahrzeugistgeschwindigkeit während des Ausrollens, können beispielsweise während eines Ausrollvorgangs selbst korrigiert werden. Beispielsweise kann das Fahrzeug während des Ausrollens abgebremst oder beschleunigt werden, sodass das reale Ausrollen mit dem simulierten Ausrollen in Übereinstimmung gebracht werden kann.

Die Erfindung wird im Folgenden anhand von bevorzugten Ausführungsbeispielen näher erläutert. Hierbei zeigen

Figur 1     ein Fahrzeug, welches sich mit einer Geschwindigkeit auf einer Fahrstrecke auf ein Ausrollereignis zu bewegt,
Figur 2     eine Repräsentation der Fahrstrecke gemäß Figur 1 in einer digitalen Karte gemäß dem Stand der Technik,
Figur 3     eine Repräsentation der Fahrstrecke gemäß Figur 1 in einer digitalen Karte, wobei die zugrunde liegenden Kartendaten gemäß der Erfindung bearbeitet wurden,
Figur 4     ein Ablaufdiagramm eines Verfahrens zum Bearbeiten von Kartendaten einer digitalen Karte,
Figur 5     eine Repräsentation der Fahrstrecke gemäß Figur 1, wobei die zugrunde liegenden Kartendaten gemäß der Erfindung bearbeitet wurden,
Figur 6     eine Vorrichtung zum Bearbeiten von Kartendaten einer digitalen Karte und
Figur 7     ein Ablaufdiagramm eines Verfahrens zum Bearbeiten von Kartendaten einer digitalen Karte.

Im Folgenden können für gleiche Merkmale gleiche Bezugszeichen verwendet werden.

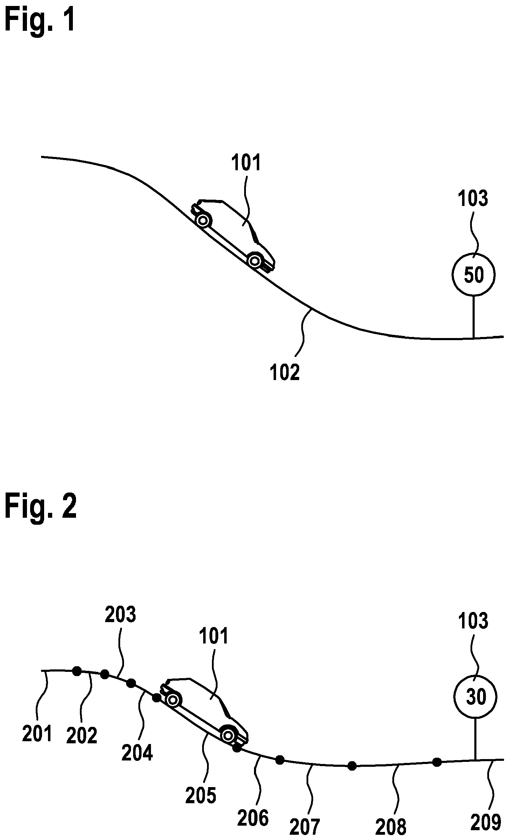

Figur 1 zeigt ein Fahrzeug 101, welches sich beispielsweise mit einer Geschwindigkeit von 100 km/h auf einer Fahrstrecke 102 auf ein Ausrollereignis 103 zu bewegt. Das Ausrollereignis 103 ist in diesem Fall eine Geschwindigkeitsbeschränkung auf 50 km/h. Im Stand der Technik sind Verfahren beschrieben, um die Fortbewegung des Fahrzeugs 101 aus Sicht des Treibstoffverbrauchs optimal zu gestalten, indem zum Beispiel durch rechtzeitiges Anheben eines Fußes eines Fahrers des Fahrzeugs 101 vom Gaspedal ein Ausrollvorgang mit schleppendem Motor umgesetzt wird. Eine andere Strategie kann zum Beispiel darin bestehen, einen so genannten Segelvorgang rechtzeitig vor Erreichen des Ausrollereignisses 103 einzuleiten, indem der Motor vom Antriebsstrang getrennt wird (Auskuppeln; dabei kann der Motor entweder im Leerlauf weiterbetrieben oder gänzlich abgeschaltet werden).

Die Bewegung des Fahrzeugs 101 kann dabei mit Hilfe einer Differenzialgleichung Gl. 1 (Fahrwiderstandsgleichung) beschrieben werden, wobei im Folgenden die Abkürzung "Gl." für Gleichung steht:

$$v \cdot \frac{dv}{ds} = -b \cdot v^2 + \frac{F_{prop}}{m + m_{rot}} - a \qquad \text{Gl. 1}$$

mit

$$a = \frac{m \cdot g}{m + m_{rot}} \cdot \left( f_R \cdot \cos\gamma + \sin\gamma \right) \text{ und} \qquad \text{Gl. 2}$$

$$b = \frac{0,5 \cdot c_W \cdot \rho_l \cdot A}{m + m_{rot}} \qquad \text{Gl. 3}$$

$F_{prop}$: Antriebskraft [N]

m: Gesamtmasse des Fahrzeugs [kg]

$m_{rot}$: Ersatzmasse aus dem auf die Antriebsachse bezogenen Ersatzträgheitsmoment [kg]

$\rho_L$: Luftdichte in [kg/m$^3$]

$c_w$: Luftwiderstandsbeiwert [-]

A: Stirnfläche des Fahrzeugs [m$^2$]

$f_g$: Rollwiderstandsbeiwert [-]

g: Erdbeschleunigung [m/s$^2$]

$\gamma$: Fahrbahnsteigungswinkel [rad]

Je nach Fahrstrategie, zum Beispiel Ausrollen mit Motorschub oder Segeln, fällt die Antriebskraft $F_{prop}$ und somit der Ausrollvorgang vor dem Ausrollereignis 103 unterschiedlich aus. Der optimale Zeitpunkt zum Einleiten eines Ausrollvorgangs vor dem Ereignis 103 hängt weiterhin von individuellen Fahrzeugparametern, zum Beispiel Luftwiderstandsbeiwert, Stirnfläche oder Masse, sowie der Fahrbahnsteigung $\gamma$ ab. Komplizierend kann hinzukommen, wenn die Fahrbahnsteigung $\gamma$ nicht über den Ausrollvorgang konstant, sondern von der Ortsposition abhängig ist. Dies führt dazu, dass Gleichung Gl. 1 in der Regel nicht mathematisch geschlossen lösbar, sondern über ein numerisches Verfahren zu lösen ist.

Figur 2 zeigt die Repräsentation der Fahrstrecke 102 aus Figur 1 in einer digitalen Karte. Dabei wurde die Fahrstrecke 102 in diskrete Segmente 201 - 209 aufgeteilt, zu denen jeweils eine Steigungsinformation y abgelegt wird. Soll dabei ein gewisser Steigungsfehler nicht überschritten werden, muss das Straßenstück 102 in entsprechend viele Segmente 201 - 209 aufgeteilt werden. Je größer dabei die Steigungsänderung auf der Fahrstrecke ausfällt (Kuppen, Senken), desto kleiner müssen die Segmente ausfallen. Liegt eine sehr wellige Fahrstreckentopologie vor, bedeutet dies einen hohen Speicheraufwand zum Ablegen der entsprechenden topographischen Streckendaten, hier insbesondere der Fahrstreckensteigungsdaten.

Bei bekannten digitalen Karten für Navigationssysteme werden Informationen zu Ausrollereignissen und topographische Streckendaten getrennt voneinander abgespeichert, wobei stets für die gesamte Fahrstrecke die der Fahrstrecke zugeordneten topographischen Streckendaten abgespeichert werden. Basis der Navigationsdaten sind in der Regel so genannte "Shape Points" oder Polygone, aus denen ein Fahrstreckensegment zusammengesetzt ist. Zu diesen Segmenten oder Polygonzügen werden dann zusätzlich Höhen-/Steigungsdaten, also topographische Streckendaten, und Zusatzinformationen wie Geschwindigkeitsbegrenzungen abgelegt. Dies führt dazu, dass in der Datenbasis mehr Steigungen abgelegt sind als zum Umsetzen einer Ausrollfunktion benötigt.

Um eine Effizienz zu erhöhen, wird daher erfindungsgemäß vorgeschlagen, die topographischen Streckendaten, also insbesondere die Steigungsdaten, nur in den Bereichen abzulegen, in denen diese benötigt werden. Dies bedeutet also, dass nur die topographischen Streckendaten der Teilfahrstrecke mit dem Ausrollereignis, also der vorbestimmten Streckenposition, verknüpft oder verbunden werden. Bei einer vorausschauenden Ausrollunterstützung wäre dies zum Beispiel ein Bereich oder eine Teilfahrstrecke von maximal einigen hundert Metern vor einem Ausrollereignis wie einem Geschwindigkeitsbegrenzungszeichen oder einer Ortseinfahrt.

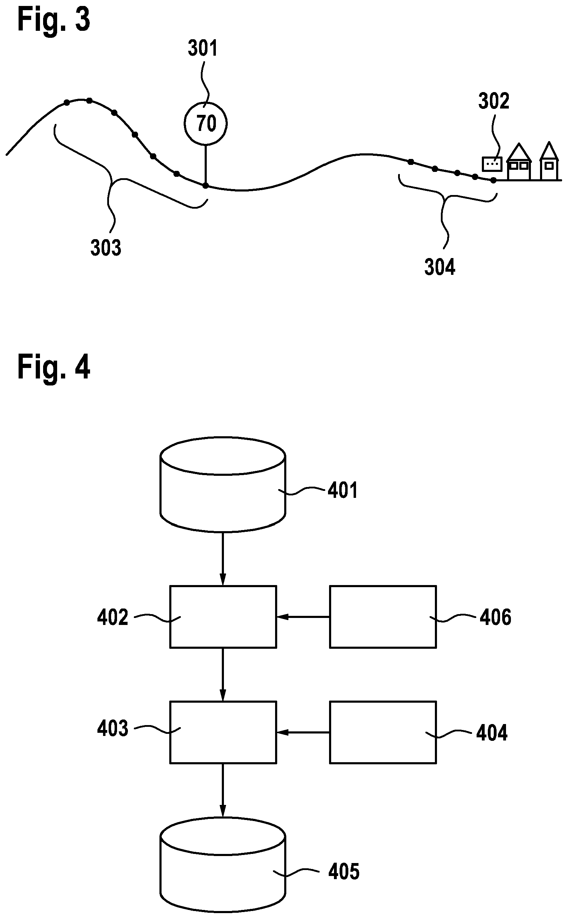

Figur 3 stellt diese erfindungsgemäße Idee exemplarisch dar. Gezeigt werden zwei geschwindigkeitsbegrenzende Situationen oder Ausrollereignisse 301 (Verkehrszeichen 70 km/h) und 302 (Ortseinfahrt). Vor dem Verkehrszeichen 70 km/h (Ausrollereignis 301) werden im Ausrollbereich für eine gewisse Straßenstrecke topographische Streckendaten, insbesondere Steigungsdaten 303, abgelegt, also mit den Positionsdaten des Ausrollereignis 301 verknüpft und abgespeichert. Äquivalent erfolgt dies für ein Straßenstück oder einer Teilfahrstrecke vor dem Ausrollereignis 302 (Steigungsdaten 304).

Figur 4 zeigt ein Ablaufdiagramm eines Verfahrens zum Bearbeiten von Kartendaten einer digitalen Karte, so dass die mit einem Ausrollereignis (301, 302) verbundenen topographischen Streckendaten, insbesondere Steigungsdaten, gewonnen werden können.

In einem Schritt 401 werden Kartendaten umfassend topographische Streckendaten einer Fahrstrecke und Positionsdaten einer vorbestimmten Streckenposition der Fahrstrecke bereitgestellt. Da diese Kartendaten im Folgenden noch bearbeitet werden und erst die bearbeiteten Kartendaten dann als Grundlage für eine bearbeitete digitale Karte verwendet werden, können diese bereitgestellten Rohdaten allgemein als Rohdaten bezeichnet werden. Diese Rohdaten können beispielsweise von einem Navigationskartendatenlieferant zur Verfügung oder bereitgestellt werden.

Diese Rohdatenbasis, also diese Rohdaten, wird in Navigationssystemen in der Regel nicht unmittelbar benutzt, sondern mittels eines Datencompilers oder mittels der erfindungsgemäßen Vorrichtung zum Bearbeiten von Kartendaten, zugeschnitten und somit insbesondere für ein Navigationssystem aufbereitet.

In diesem Datencompiler oder in dieser Vorrichtung ist beispielsweise ein Filter vorgesehen, der in einem Schritt 402 in den Rohdaten die Ausrollereignisse herausfiltert, also insbesondere die Positionsdaten der Ausrollereignisse mit den entsprechenden Geschwindigkeitsdaten.

In einer vorteilhaften Ausgestaltung kann dieses Filter über Parameter in einem zusätzlichen optionalen Schritt 406 parametrisiert werden, um die gefundenen Ausrollereignisse zu beeinflussen (z.B. nur geschwindigkeitsbegrenzende Verkehrzeichen oder zusätzlich auch Kurven, welche aufgrund ihrer Geometrie zu Geschwindigkeitseinschränkungen führen oder zusätzlich auch Ortseinfahrten).

Sind die für das zu erstellende Produkt, also hier beispielsweise die zu erstellende digitale Karte, relevanten Ausrollereignisse gefunden, werden diese einem weiteren Bearbeitungsschritt 403 zugeführt. Dort erfolgt nun die Filterung der topographischen Streckendaten, also insbesondere der Steigungswerte, welche in dem relevanten Ausrollbereich, also der Teilfahrstrecke, der gefundenen Ausrollereignisse liegen.

Da der Ausrollbereich sowohl vom Fahrzeugtyp als auch der Ausrollfunktion (Ausrollen mit Motorschleppmoment, Ausrollen mit vom Antriebsstrang abgekoppeltem Motor) abhängen kann, kann zum Beispiel das Filter gemäß einem Schritt 404 parametrisierbar sein. Im einfachsten Fall wird ein fester, maximaler Ausrollbereich vor dem Ausrollereignis angegeben, also eine konstante Länge für die Teilfahrstrecke.

Innerhalb dieses Ausrollbereichs werden sämtliche topographischen Streckendaten aus den Rohdaten herausgefiltert und gemäß einem Schritt 405 in der finalen Navigationsdatenbasis 405 zusammen mit dem zugehörigen Ausrollereignis abgelegt. Dieses Ablegen umfasst ein Verknüpfen der herausgefilterten topographischen Streckendaten mit den Positionsdaten des zugehörigen Ausrollereignisses, also der zugehörigen vorbestimmten Streckenposition, sowie ein Abspeichern dieser verknüpften Daten als bearbeitete Kartendaten. Diese bearbeiteten Kartendaten bilden die Grundlage für eine bearbeitete digitale Karte.

Es können in einem nicht gezeigten Ausführungsbeispiel insbesondere auch komplexere Filterfunktionen angewendet werden, wie zum Beispiel die Filterung einer steigungsabhängigen Ausrolllänge (bei großen Gefällen vor einem Ausrollereignis werden Steigungsdaten für einen langen Ausrollbereich herausgefiltert, bei großen Aufwärtssteigungen vor einem Ausrollereignis werden Steigungsdaten für einen kurzen Ausrollbereich herausgefiltert). Im komplexesten Fall können beispielsweise die Filterparameter für den Schritt 404 Fahrzeugparameter (zum Beispiel Masse, Luftwiderstandsbeiwert oder Rollwiderstand) sein. Im Filter gemäß Schritt 403 selbst kann beispielweise ein Ausrollvorgang für ein Fahrzeug mit diesen Parametern simuliert und damit die Ausrolllänge, also eine Länge für die Teilfahrstrecke, bestimmt und basierend auf der bestimmten Ausrolllänge die topographischen Streckendaten, insbesondere die Steigungsparameter, aus den Rohdaten gemäß dem Schritt 401 herausgefiltert und in der Navigationsdatenbasis gemäß dem Schritt 405 abgelegt.

In einer anderen vorteilhaften Ausgestaltung kann vorgesehen sein, eine Menge an topographischen Streckendaten, also insbesondere eine Steigungsdatenmenge, auf ein Minimum zu begrenzen.

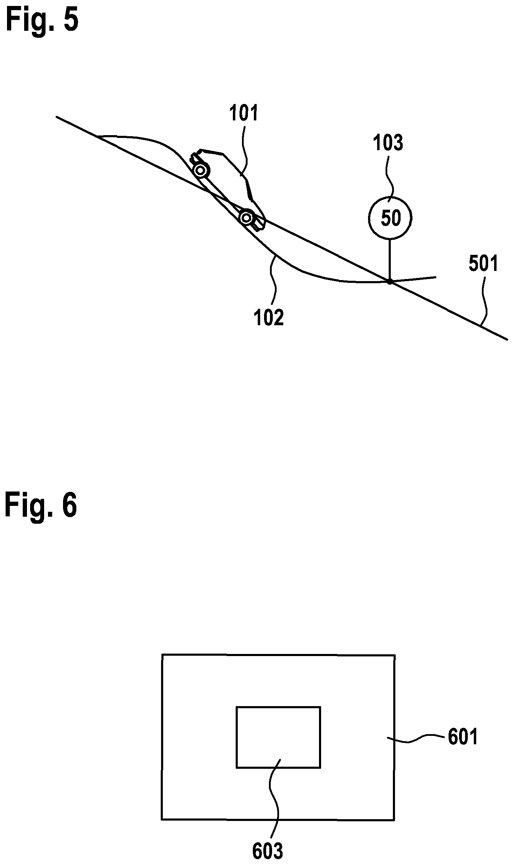

Dies ist in Figur 5 exemplarisch dargestellt.

Figur 5 zeigt wieder die Szene aus Figur 1. Das Fahrzeug 101 befährt ein Gefälle in Richtung eines Ausrollereignisses 103 "Verkehrzeichen 50 km/h". In diesem Fall wird das reale Steigungsprofil der Fahrstrecke 102 durch eine einzige Steigungslinie 501 repräsentiert. Es handelt sich dabei um ein mittleres Gefälle für einen gewissen Bereich, also einer gewissen Länge der Teilfahrstrecke, vor dem Ausrollereignis 103. Nur die diesem Bereich zugeordneten topographischen Streckendaten werden mit den Positionsdaten des Ausrollereignisses 103 verknüpft und in der Navigationskarte gemäß dem Schritt 405 gemäß Figur 4 abgespeichert. Neben der äußerst geringen Steigungsdatenmenge liegt ein weiterer Vorteil dieser insbesondere Ausgestaltung darin, dass die Differenzialgleichung Gl. 1 in diesem Fall analytisch gelöst werden kann, um die Geschwindigkeit v(s) über der zurückgelegten Wegstrecke s zu beschreiben.

Durch Anwenden mathematischer Operationen kann gezeigt werden, dass Gl. 4 eine Lösung der Gleichung Gl. 1 darstellt, wenn die Antriebskraft $F_{prop}$ zu Null gesetzt wird (Ausrollen ohne Antrieb) und von einem konstanten Steigungswinkel $\gamma$, wie in Figur 5 dargestellt, ausgegangen wird.

$$v(s) = \sqrt{-\frac{a}{b} + \left(\frac{a}{b} + v_0^{\,2}\right)e^{-2bs}} \qquad\qquad \text{Gl. 4}$$

Dabei werden die Parameter a und b weiter durch die Gleichungen Gl. 2 und Gl. 3 repräsentiert, $v_0$ stellt die Anfangsgeschwindigkeit des Fahrzeugs zu Beginn eines Ausrollvorganges dar. Dieses Vorgehen hat den Vorteil, dass nur ein einziger Steigungsparameter für ein Ausrollereignis in der digitalen Karte abgelegt werden muss. Weiterhin kann das Ausrollverhalten v(s) vor einem Ausrollereignis durch Anwendung von Gl. 4 während der Fahrt bestimmt werden. Dabei werden Fahrzeugparameter wie die aktuelle Fahrzeugmasse oder der Luftwiderstandsbeiwert erst während der Berechnung im Fahrzeug eingesetzt, das heißt es ist keine fahrzeugspezifische Ausprägung der Daten in der Navigationskartendatenbasis 405 in Figur 4 notwendig.

Die Gleichung Gl. 4 kann insbesondere folgendermaßen vorteilhaft angewendet werden: Auf Basis des elektronischen Horizonts eines Navigationsgeräts wird vorausschauend das nächste Ausrollereignis in Fahrtrichtung bestimmt. Das Ausrollereignis trägt die Zielgeschwindigkeit v(s) sowie die mittlere Straßensteigung oder die mittlere Fahrstreckensteigung γ. Beide Werte kann man in Gleichung Gl. 4 einsetzen. Setzt man nun noch die aktuelle Fahrzeuggeschwindigkeit $v_0$ des Fahrzeugs ein, so kann man Gl. 4 nach der Wegstrecke s auflösen, die benötigt wird, um die aktuelle Fahrzeuggeschwindigkeit mittels eines Ausrollvorganges auf die Zielgeschwindigkeit zu reduzieren. Somit lässt sich analytisch bestimmen, um welche Wegstrecke vor einem Ausrollereignis ein Ausrollvorgang einzuleiten ist.

Bei geeigneter Wahl von Vereinfachungen des Steigungsverlaufs γ oder der Antriebskraft $F_{prop}$ über der Ausrollstrecke s sind auch andere geschlossene mathematische Lösungen als Gl. 4 denkbar. Besonders einfach wird die Lösung durch $F_{prop} = 0$ (oder $F_{prop} = const$) sowie γ = const. Neben der hier dargestellten Lösung im Ortsbereich (= Bestimmen der Fahrzeuggeschwindigkeit v(s) über der Wegstrecke s) ist in ähnlicher Art eine analytische Lösung im Zeitbereich (= Bestimmen der Fahrzeuggeschwindigkeit v(t) über der Zeit t) möglich.

Durch die Annahme einer konstanten Steigung y wird gegebenenfalls ein Fehler bei der Berechnung eines korrekten Ausrollpunktes zum Einleiten eines Ausrollmanövers vor einem Ausrollereignis (103, 301, 302) in Kauf genommen, um die benötigte Steigungsdatenmenge im Navigationsdatenträger, die dort gemäß dem Schritt 405 (Figur 4) abgelegt oder abgespeichert wurden, so gering wie möglich zu halten. Um dennoch einen möglichst präzisen Ausrollvorgang durchzuführen, selbst wenn das reale Steigungsprofil deutlich von der angenommenen konstanten Steigung γ abweicht, kann eine weitere vorteilhafte Ausgestaltung im Fahrzeug erfolgen.

Dabei wird nach Einleiten des Ausrollvorgangs mittels Gl. 4 wiederholt die vorberechnete Sollgeschwindigkeit v(s) = $v_{soll}$(s) mit der real im Fahrzeug gemessenen Geschwindigkeit $v_{ist}$(s) verglichen. Die Geschwindigkeit $v_{ist}$(s) kann beispielsweise mit Sensoren in einem Bremssystem (ABS, ESP) oder mittels eines GPS-Empfängers im Navigationssystem ermittelt werden. Sollte sich während des Ausrollvorgangs eine Differenz Δv(s) = $v_{soll}$(s) - $v_{ist}$(s) einstellen, so kann diese durch zusätzliche Maßnahmen ausgeregelt werden. Dabei sollten die Regeleingriffe vorteilhafter Weise derart gestaltet werden, dass möglichst keine kinetische Energie sinnlos in Wärmeenergie umgewandelt wird. Ist Δv(s) > 0, das heißt die reale Geschwindigkeit geringer als die vorberechnete Ausrollgeschwindigkeit, so kann beispielsweise eine laufende Klimaanlage kurzfristig automatisch abgestellt werden oder ein laufender Generator kurzfristig abgeschaltet werden, um den Rollwiderstand des Fahrzeugs zu reduzieren. Eine weitere Möglichkeit bestünde darin, ein Getriebe in den Leerlaufbetrieb zu schalten, um einen schleppenden Antriebsmotor vom Antriebsstrang zu koppeln. Ist Δv(s) < 0, das heißt die reale Geschwindigkeit höher als die vorberechnete Ausrollgeschwindigkeit, so muss der Rollwiderstand zur Kompensation der Geschwindigkeitsabweichung erhöht werden, zum Beispiel durch Einschalten eines Generators, Einschalten der Klimaanlage, Einlegen eines Ganges, sofern der Antriebsmotor vom Antriebsstrang getrennt ist (= Verlassen des Segelbetriebs) oder durch Herunterschalten der Getriebeübersetzung (= Erhöhen der Motordrehzahl; dabei wird zwar ein Teil der kinetischen Energie des Fahrzeugs in nutzlose Wärme umgewandelt, ein anderer Teil kann aber gegebenenfalls durch höhere Drehzahl des Generators in ein Mehr an elektrischer Energie zur Speicherung in der Batterie umgewandelt werden).

Figur 6 zeigt eine Vorrichtung 601 zum Bearbeiten von Kartendaten einer digitalen Karte, wobei die Kartendaten topographische Streckendaten einer Fahrstrecke und Positionsdaten einer vorbestimmten Streckenposition der Fahrstrecke umfassen, wobei den Positionsdaten Geschwindigkeitsdaten einer Fahrzeugsollgeschwindigkeit einer vorbestimmten Streckenposition zugeordnet sind.

Die Vorrichtung 601 umfasst eine Verknüpfungseinrichtung 603, die ausgebildet ist, ausschließlich für eine Teilfahrstrecke der vor der vorbestimmten Streckenposition bezogen auf eine Fahrtrichtung liegenden Fahrstrecke die dieser Teilfahrstrecke zugeordneten topographischen Streckendaten mit den Positionsdaten zu verknüpfen und die verknüpften Daten als bearbeitete Kartendaten einer bearbeiteten digitalen Karte abzuspeichern.

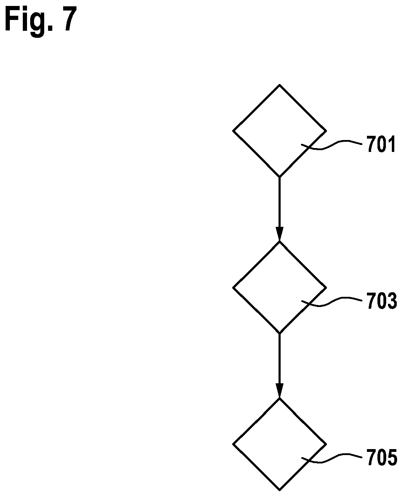

Figur 7 zeigt ein Ablaufdiagramm eines Verfahrens zum Bearbeiten von Kartendaten einer digitalen Karte.

Hierbei werden gemäß einem Schritt 701 Kartendaten umfassend topographische Streckendaten einer Fahrstrecke und Positionsdaten einer vorbestimmten Streckenposition der Fahrstrecke bereitgestellt, wobei den Positionsdaten Geschwindigkeitsdaten einer Fahrzeugsollgeschwindigkeit einer vorbestimmten Streckenposition zugeordnet sind.

Gemäß einem Schritt 703 werden ausschließlich für eine Teilfahrstrecke der vor der vorbestimmten Streckenposition bezogen auf eine Fahrtrichtung liegenden Fahrstrecke die dieser Teilfahrstrecke zugeordneten topographischen Streckendaten mit den Positionsdaten verknüpft, wobei die verknüpften Daten als bearbeitete Kartendaten einer bearbeiteten digitalen Karte gemäß einem Schritt 705 abgespeichert werden.

Die Erfindung umfasst also insbesondere den Gedanken, Parameter für Ausrollereignisse zu berechnen oder vorzuberechnen, wobei räumlich vor einem Ausrollereignis Streckendaten, insbesondere topographische Streckendaten, einer Datenbasis an Kartendaten einer digitalen Karte nach ausrollrelevanten Parametern, beispielsweise die Ausrollereignisse, also die vorbestimmten Streckenpositionen, durchsucht werden, wobei die gefundenen topographischen Streckendaten, die einem solchen Ausrollereignis zugeordnet sind, für eine Datenreduktion bearbeitet werden, sodass nach der Bearbeitung die so bearbeiteten Daten mit dem Ausrollereignis verbunden oder verknüpft werden.

Bei solchen Ausrollereignissen kann es sich insbesondere um Verkehrszeichen, beispielsweise Geschwindigkeitsbegrenzungszeichen und/oder Aufhebungszeichen, handeln oder beispielsweise um Kurven oder Ortseinfahrten handeln. Die ausrollrelevanten Parameter, also insbesondere die topographischen Streckendaten, können Steigungs- und/oder Höhendaten umfassen. Die Steigungsdaten zu einer einzigen Steigung oder zu einer einzigen Höhendatendifferenz können je Ausrollereignis beispielsweise verdichtet werden, insbesondere gemittelt werden. Insbesondere kann eine geschlossene Lösung der Differenzialgleichung Gl. 1 zum Berechnen eines Ausrollzeitpunkts, Lösung im Zeitbereich, oder der Ausrollentfernung, entspricht der Ausrollstrecke, Lösung im Ortsbereich, verwendet werden. Insbesondere kann zusätzlich eine Regelung des Ausrollvorgangs vorgesehen sein, um Ungenauigkeiten in der Vorberechnung des Ausrollvorgangs zu kompensieren.

**Patentansprüche**

1. Verfahren zum Bearbeiten von Kartendaten einer digitalen Karte, wobei Kartendaten umfassend topographische Streckendaten einer Fahrstrecke und Positionsdaten von vorbestimmten Streckenpositionen der Fahrstrecke als Rohdaten bereitgestellt werden (701), wobei die topographischen Streckendaten Steigungsdaten umfassen, wobei den Positionsdaten Geschwindigkeitsdaten einer jeweiligen Fahrzeugsollgeschwindigkeit an den vorbestimmten Streckenpositionen zugeordnet sind, wobei die vorbestimmten Streckenpositionen Ausrollereignissen entsprechen, wobei die Rohdaten für ein Navigationssystem aufbereitet werden, indem ein Filter vorgesehen ist, der in den Rohdaten die Ausrollereignisse herausfiltert, wobei die herausgefilterten Ausrollereignisse einem weiteren Bearbeitungsschritt zugeführt werden, in welchem eine Filterung der topographischen Streckendaten erfolgt, welche in einem jeweiligen Ausrollbereich vor den herausgefilterten Ausrollereignissen liegen, wobei der jeweilige Ausrollbereich einer Teilfahrstrecke einer in Fahrtrichtung vor dem zugehörigen herausgefilterten Ausrollereignis liegenden Fahrstrecke entspricht,
   **dadurch gekennzeichnet, dass**
   innerhalb des jeweiligen Ausrollbereichs die Steigungsdaten aus den Rohdaten herausgefiltert und in einer finalen Navigationsdatenbasis zusammen mit dem zugehörigen herausgefilterten Ausrollereignis abgelegt werden, wobei das Ablegen ein Verknüpfen der herausgefilterten Steigungsdaten mit den Positionsdaten des zugehörigen herausgefilterten Ausrollereignisses umfasst, so dass die verknüpften Daten als bearbeitete Kartendaten einer bearbeiteten digitalen Karte abgespeichert werden (705).

2. Verfahren nach Anspruch 1, wobei eine Länge der Teilfahrstrecke in Abhängigkeit von einer Topographie der Fahrstrecke vor der vorbestimmten Streckenposition bestimmt wird.

3. Verfahren nach Anspruch 1 oder 2, wobei eine Länge der Teilfahrstrecke in Abhängigkeit eines eine physikalische Eigenschaft eines Fahrzeugs beschreibenden Fahrzeugparameters bestimmt wird.

4. Verfahren nach einem der vorherigen Ansprüche, wobei eine Länge der Teilfahrstrecke in Abhängigkeit eines einen Betriebszustand eines Fahrzeugs beschreibenden Fahrzeugbetriebsparameters bestimmt wird.

5. Verfahren nach Anspruch 3 oder 4, wobei basierend auf den entsprechenden Parametern ein Ausrollen des Fahrzeugs zum Erreichen der vorbestimmten Streckenposition mit der vorgegebenen Sollgeschwindigkeit simuliert wird, so dass basierend auf der Simulation die Länge der Teilfahrstrecke bestimmt wird.

6. Verfahren nach einem der vorherigen Ansprüche, wobei vor der Verknüpfung die der Teilfahrstrecke zugeordneten Steigungsdaten gemittelt werden, um gemittelte Steigungsdaten zu bilden, die der Teilfahrstrecke zugeordnet werden, wobei diese zugeordneten gemittelten Steigungsdaten mit den Positionsdaten verknüpft werden.

7. Vorrichtung (601) zum Bearbeiten von Kartendaten einer digitalen Karte, wobei die Kartendaten topographische Streckendaten einer Fahrstrecke und Positionsdaten von vorbestimmten Streckenpositionen der Fahrstrecke umfassen, wobei die topographischen Streckendaten Steigungsdaten umfassen, wobei den Positionsdaten Geschwindigkeitsdaten einer jeweiligen Fahrzeugsollgeschwindigkeit an den vorbestimmten Streckenpositionen zugeordnet sind, wobei die vorbestimmten Streckenpositionen Ausrollereignissen entsprechen, wobei die Vorrichtung (601) ausgebildet ist, das Verfahren nach einem der vorherigen Ansprüche durchzuführen, wobei die Vorrichtung (601) zum Aufbereiten der Rohdaten für ein Navigationssystem einen Filter zum Herausfiltern der Ausrollereignisse aus den Rohdaten und zum Filtern der topographischen Streckendaten umfasst, welche in einem jeweiligen Ausrollbereich vor den herausgefilterten Ausrollereignissen liegen, wobei der jeweilige Ausrollbereich einer Teilfahrstrecke einer in Fahrtrichtung vor dem zugehörigen herausgefilterten Ausrollereignis liegenden Fahrstrecke entspricht, wobei der Filter ausgebildet ist, innerhalb des jeweiligen Ausrollbereichs die Steigungsdaten aus den Rohdaten herauszufiltern,

**dadurch gekennzeichnet, dass**
die Vorrichtung (601) eine Verknüpfungseinrichtung (603) umfasst, die ausgebildet ist, die herausgefilterten Steigungsdaten mit den Positionsdaten des zugehörigen herausgefilterten Ausrollereignisses zu verknüpfen und die verknüpften Daten als bearbeitete Kartendaten einer bearbeiteten digitalen Karte abzuspeichern, um die verknüpften Daten in einer finalen Navigationsdatenbasis zusammen mit dem zugehörigen herausgefilterten Ausrollereignis abzulegen.

8. Computerprogramm, umfassend Programmcode zur Durchführung des Verfahrens nach einem der Ansprüche 1 bis 6, wobei das Computerprogramm in einem Computer ausgeführt wird.

**Claims**

1. Method for processing map data of a digital map, wherein map data comprising topographic route data of a route and position data from predetermined route positions on the route are provided (701) as raw data, wherein the topographic route data comprise gradient data, wherein the position data have associated speed data for a respective vehicle target speed at the predetermined route positions, wherein the predetermined route positions correspond to coasting events, wherein the raw data are conditioned for a navigation system by virtue of a filter being provided that filters out the coasting events in the raw data, wherein the filtered-out coasting events are supplied to a further processing step involving filtering of the topographic route data that are in a respective coasting area ahead of the filtered-out coasting events, wherein the respective coasting area corresponds to a route section of a route ahead of the associated filtered-out coasting event in the direction of travel,
**characterized in that**
within the respective coasting area the gradient data are filtered out from the raw data and stored in a final navigation database together with the associated filtered-out coasting event, wherein the storing comprises linking the filtered-out gradient data to the position data of the associated filtered-out coasting event, so that the linked data are stored (705) as processed map data of a processed digital map.

2. Method according to Claim 1, wherein a length of the route section is determined on the basis of a topography of the route ahead of the predetermined route position.

3. Method according to Claim 1 or 2, wherein a length of the route section is determined on the basis of a vehicle parameter describing a physical property of a vehicle.

4. Method according to one of the preceding claims, wherein a length of the route section is determined on the basis of a vehicle operating parameter describing an operating state of a vehicle.

5. Method according to Claim 3 or 4, wherein the applicable parameters are taken as a basis for simulating coasting of the vehicle to reach the predetermined route position at the prescribed target speed, so that the simulation is taken as a basis for determining the length of the route section.

6. Method according to one of the preceding claims, wherein the gradient data associated with the route section are averaged before the linking in order to form averaged gradient data that are associated with the route section, wherein these associated averaged gradient data are linked to the position data.

7. Apparatus (601) for processing map data of a digital map, wherein the map data comprise topographic route data of a route and position data from predetermined route positions on the route, wherein the topographic route data comprise gradient data, wherein the position data have associated speed data for a respective vehicle target speed at the predetermined route positions, wherein the predetermined route positions correspond to coasting events, wherein the apparatus (601) is designed to perform the method according to one of the preceding claims, wherein for the purpose of conditioning the raw data for a navigation system the apparatus (601) comprises a filter for filtering out the coasting events from the raw data and for filtering the topographic route data situated in a respective coasting area ahead of the filtered-out coasting events, wherein the respective coasting area corresponds to a route section of a route situated ahead of the associated filtered-out coasting event in the direction of travel, wherein the filter is designed to filter out the gradient data from the raw data within the respective coasting area,
**characterized in that**
the apparatus (601) comprises a linking device (603) designed to link the filtered-out gradient data to the position data of the associated filtered-out coasting event and to store the linked data as processed map data of a processed digital map, in order to store the linked data in a final navigation database together with the associated filtered-out coasting event.

8. Computer program, comprising program code for performing the method according to one of Claims 1 to 6, wherein the computer program is executed on a computer.

**Revendications**

1. Procédé de traitement de données cartographiques d'une carte numérique, les données cartographiques comprenant des données de parcours topographiques d'un trajet et des données de position de positions de parcours prédéfinies du trajet étant préparées (701) en tant que données brutes, les données de parcours topographiques comprenant des données d'inclinaison de pente, des données de vitesse d'une vitesse théorique respective de véhicule aux positions de parcours prédéterminées étant attribuées aux données de position, les positions de parcours prédéterminées correspondant à des évènements de marche par inertie, les données brutes étant traitées pour un système de navigation dans lequel est prévu un filtre qui exfiltre les évènements de marche par inertie dans les données brutes, les évènements de marche par inertie exfiltrés étant acheminés vers une autre étape de traitement dans laquelle a lieu un filtrage des données de parcours topographiques, lesquelles se situent dans une zone respective de marche par inertie avant les évènements de marche par inertie exfiltrés, la zone de marche par inertie respective d'un trajet partiel correspondant à un trajet se situant dans le sens de la marche avant l'évènement de marche par inertie exfiltré correspondant,
**caractérisé en ce
qu'**à l'intérieur de la zone de marche par inertie respective, les données d'inclinaison de pente sont exfiltrées des données brutes et sont déposées dans une base de données de navigation finale ensemble avec l'évènement de marche par inertie exfiltré correspondant, la dépose comprenant une association des données d'inclinaison de pente exfiltrées avec les données de position de l'évènement de marche par inertie exfiltré correspondant de telle sorte que les données associées sont mémorisées en tant que données cartographiques traitées d'une carte numérique traitée (705).

2. Procédé selon la revendication 1, une longueur du trajet partiel étant déterminée en fonction d'une topographie du trajet avant la position de parcours prédéfinie.

3. Procédé selon la revendication 1 ou 2, une longueur du trajet partiel étant déterminée en fonction d'un paramètre de véhicule décrivant une propriété physique d'un véhicule.

4. Procédé selon l'une quelconque des revendications précédentes, une longueur du trajet partiel étant déterminée en fonction d'un paramètre de fonctionnement du véhicule décrivant un état de fonctionnement d'un véhicule.

5. Procédé selon la revendication 3 ou 4, une marche par inertie du véhicule pour atteindre la position de parcours prédéfinie à la vitesse théorique prédéterminée étant simulée en se basant sur les paramètres correspondants de telle sorte que la longueur du trajet partiel est déterminée en se basant sur la simulation.

6. Procédé selon l'une quelconque des revendications précédentes, les données d'inclinaison de pente attribuées au trajet partiel étant déterminées avant l'association pour former des données d'inclinaison de pente mises en moyenne qui sont attribuées au trajet partiel, ces données d'inclinaison de pente mises en moyenne attribuées étant associées aux données de position.

7. Dispositif (601) de traitement de données cartographiques d'une carte numérique, les données cartographiques comprenant des données de parcours topographiques d'un trajet et des données de position de positions de parcours prédéterminées du trajet, les données de parcours topographiques comprenant des données d'inclinaison de pente, des données de vitesse d'une vitesse théorique respective de véhicule aux positions de parcours prédéterminées étant attribuées aux données de position, les positions de parcours prédéterminées correspondant aux évènements de marche par inertie, le dispositif (601) étant constitué pour exécuter le procédé selon l'une quelconque des revendications précédentes, le dispositif (601) pour traiter les données brutes pour un système de navigation comprenant un filtre pour exfiltrer les évènements de marche par inertie des données brutes et pour filtrer les données de parcours topographiques, lesquelles se situent dans une zone de marche par inertie respective avant les évènements de marche par inertie exfiltrés, la zone de marche par inertie respective d'un trajet partiel correspondant à un trajet situé dans le sens de la marche avant l'évènement de marche par inertie exfiltré correspondant, le filtre étant constitué pour exfiltrer les données d'inclinaison de pente des données brutes à l'intérieur de la zone de marche par inertie respective,

**caractérisé en ce que**

le dispositif (601) comprend un système d'association (603), qui est constitué pour associer les données d'inclinaison de pente exfiltrées aux données de position de l'évènement de marche par inertie exfiltré correspondant et mémoriser les données associées en tant que données cartographiques traitées d'une carte numérique traitée, pour déposer les données associées dans une base de données de navigation finale ensemble avec l'évènement de marche par inertie exfiltré correspondant.

8. Programme informatique comprenant un code de programmation pour exécuter le procédé selon l'une quelconque des revendications 1 à 6, le programme informatique étant exécuté dans un ordinateur.

## Fig. 1

101

103

50

102

## Fig. 2

203

101

103

201  202

204

30

205

206  207  208  209

# Fig. 3

# Fig. 4

# Fig. 5

101

103

50

501

102

# Fig. 6

601

603

# Fig. 7

701

703

705

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2591968 A2
- DE 102009006524 A1
- EP 2529993 A1
- WO 2006107267 A1
- US 20040068359 A1
- US 5913376 A
- DE 10345319 A1